# EUROPEAN PATENT SPECIFICATION

(11) **EP 0 591 006 B1**
(45) Date of publication and mention of the grant of the patent: **14.05.1997**
(21) Application number: 93307836.2
(22) Date of filing: 01.10.1993
(51) Int. Cl.: B62B 5/06

(54) **Handlebar assembly for a trolley**
Lenkstange für Handwagen
Guidon pour chariots

(30) Priority: 01.10.1992 GB 9220685
(43) Date of publication of application: 06.04.1994
(73) Proprietor: CLARES MERCHANDISE HANDLING EQUIPMENT LIMITED, Wells, Somerset BA5 1UT (GB)
(72) Inventor: Abbott, David Michael, Weston-super-Mare, Avon BS24 8DR (GB)
(74) Representative: Brown, Kenneth Richard

(56) References cited:
- EP-A- 0 351 232
- CA-A- 1 274 263
- DE-A- 2 050 264

## Description

This invention relates to trolleys and, more particularly, to handlebar assemblies therefor of a type in which the ends of a grip handle in the form of a rigid tube are secured to respective supports extending from the trolley. In a known form, the supports each comprise a wire or tube bent on itself to form a substantially U-shaped loop. See GB-A-2 014 527. As used herein, the term "trolley" is to be understood to embrace any form of wheeled vehicle which can be pushed or pulled by hand, for example supermarket shopping carts, hospital beds, etc.

EP-A-0 351 232 discloses a handlebar assembly of the above-described type. An insert of resilient plastic material, located in each wire loop support, is adapted to mate with a cap member fitted over the loop to hold the insert in place. The cap member has an annular socket which receives the handlebar end. A bayonet-type cut-out in the handlebar end engages a cross-bar within the cap member socket. The insert includes a spring clip which engages and retains the handlebar end.

The invention provides the handlebar assembly defined by claim 1. The sub-claims 2 to 12 are directed to embodiments of the invention, and claim 13 to a trolley incorporating such a handlebar assembly.

Specific embodiments of the invention will now be described, by way of example only, with reference to the accompanying drawings, in which:
Fig. 1 is a general perspective view of a type of handlebar assembly to which the invention relates;
Figs. 2(a)-(c) are three views of one end of the handlebar assembly according to a first embodiment which illustrate the assembly operation;
Fig. 3 is a sectional view of the assembly of Fig. 2 in a plane containing the handle tube axis;
Fig. 4 is a view illustrating one end of the handlebar assembly according to a second embodiment;
Fig. 5 is a sectional view of the assembly of Fig. 4 in a plane containing the handle tube axis;
Fig. 6(a) is a part sectional view and Fig. 6(b) is an end view of the handlebar assembly according to a third embodiment; and
Fig. 7 shows a detail of the assembly of Fig. 6.

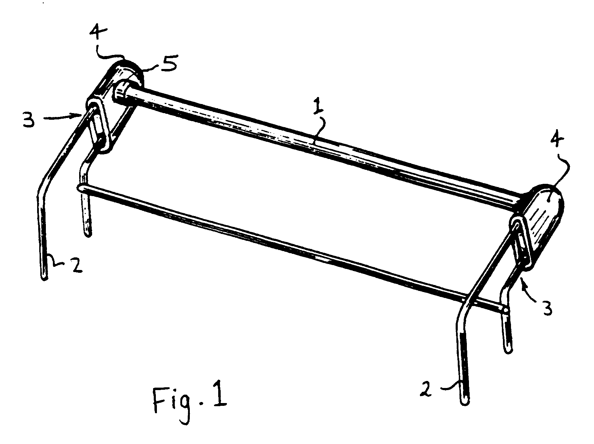

Fig. 1 shows basic features of a handlebar assembly such as may be fitted, for example, to a supermarket shopping trolley to enable the trolley to be controlled by a customer. The trolley provides supports which extend in a generally upward direction at the rear of the trolley. The supports typically form part of the trolley's chassis or basket structure. In a known arrangement, each support comprises a wire or tube member 2 which is bent back on itself at its upper end to form a substantially U-shaped loop portion 3. The two wire loops 3 each receive a sheath-like cap member 4 which comprises a hollow plastic moulding. The cap members 4 have outwardly projecting sleeve portions 5 in which the ends of a rigid tube 1 are accommodated. The tube 1 thus provides a horizontal grip handle for the trolley. The above-described features of the assembly shown in Fig. 1 are all known. This invention is concerned particularly with the manner in which the ends of the handle tube 1 are secured to the said supports.

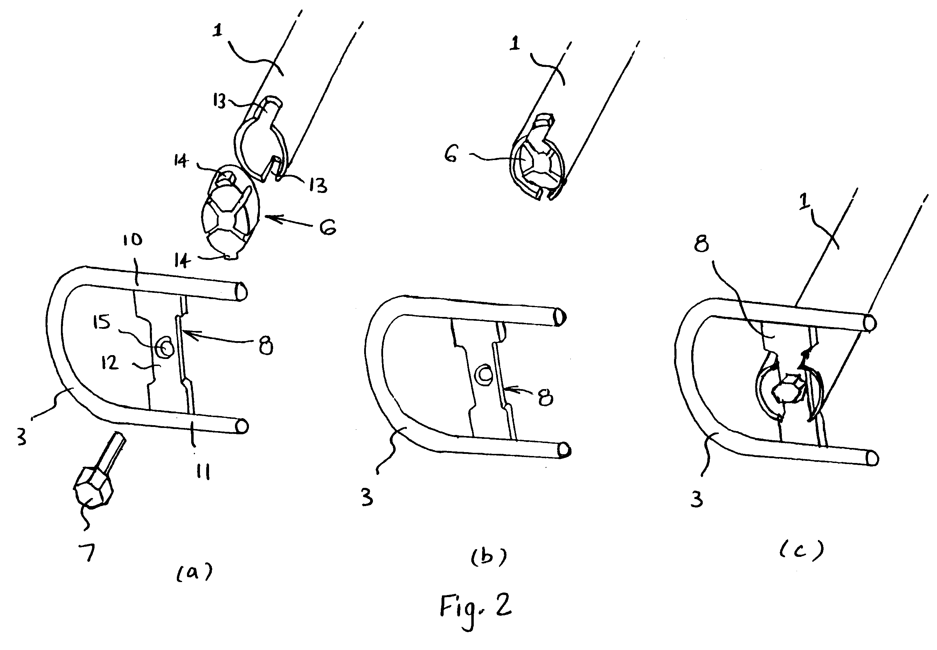

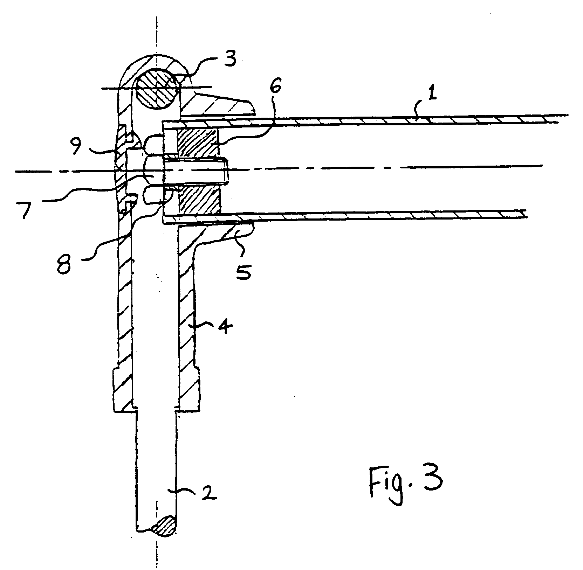

Referring to Figs. 2 and 3, which show a first embodiment of the invention, it can be seen that a support in the form of a wire loop portion 3 incorporates a fixing member in the form of a metal plate 8, made, for example, by pressing. The plate 8 is rigidly fixed to the loop 3, for example by welding or adhesive, so as to bridge the two parallel limbs 10, 11 thereof. The plate 8 has a hole 15 for the insertion of a fixing bolt or screw 7. The threaded end of the bolt 7 is received in an insert member in the form of an expanding bush 6. As shown in Fig. 2(b), the bush 6 is pushed into the end of the handle tube 1. In this way, the bolt 7 is inserted through the hole 15 in the plate 8 and thence into the bush 6. Tightening the bolt 7 thus firmly secures the end of the tube 1 to the loop portion 3, as shown in Fig. 2(c). Both ends of the handle 1 are secured in this way.

It is desirable that the handle 1 does not rotate in use. Supermarket customers complain that the trolley feels out of control if the handle moves. For this reason, the end of the tube 1 preferably has a pair of diametrically opposed cut-outs 13 which engage a reduced width portion 12 of the I-shaped pressing 8. This arrangement provides a well-defined location for the end of the handle and prevents rotation of the handle. The cut-outs 13 can serve a useful secondary function of seating two lugs 14 formed on the bush 6. This arrangement stops the bush rotating while the bolt 7 is being tightened.

Fig. 3 is a sectional view of one end of the completed assembly, in which the moulded cap 4 for the loop portion 3, omitted for clarity in Fig. 2, is shown. The end of the handle tube 1 is inserted in the sleeve portion 5. It will be appreciated that the sleeve portion is not essential, a simple aperture in the cap would suffice. A hole provided in the cap 4 opposite the handle end is filled by a trim insert 9 for improved aesthetics.

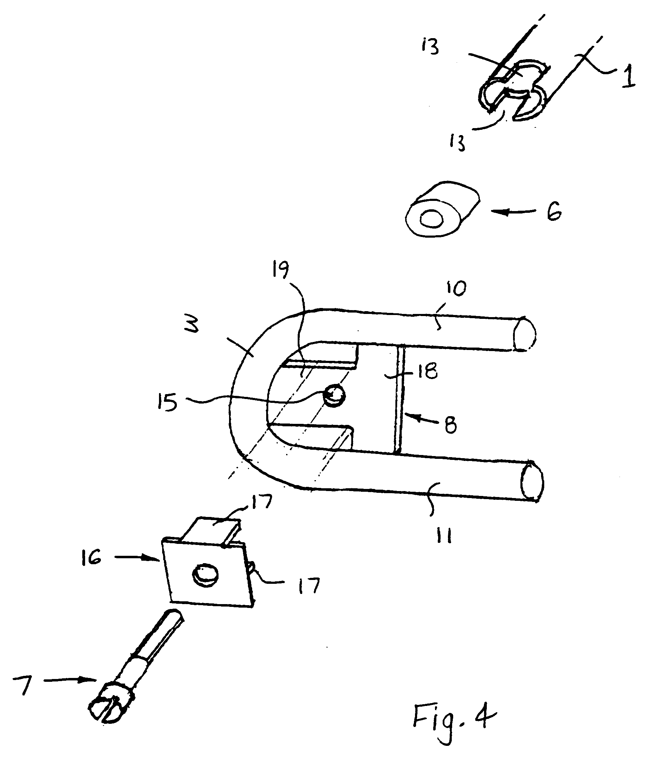

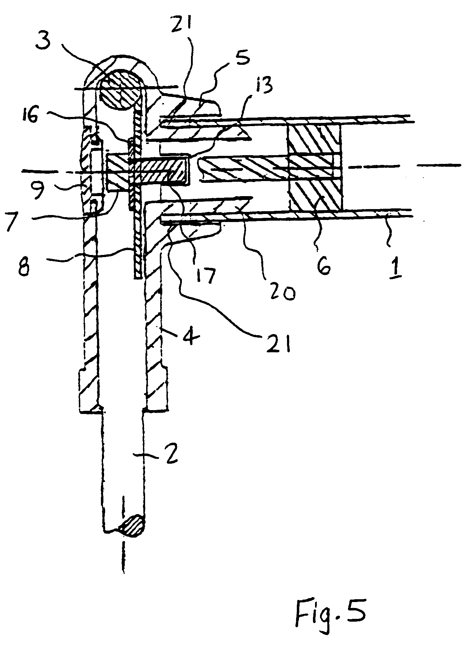

Figs. 4 and 5 illustrate a second embodiment of the invention, in which the same reference numerals denote elements which are the same as or equivalent to those of the first embodiment. In this embodiment, the sleeve portion 5 of the moulded cap 4 has a more complicated structure. As shown in the sectional view of Fig. 5, an internal annular wall 20 defines with the outer sleeve 5 a circular groove 21 in which the end of the handle tube 1 is seated.

The tube 1 is again secured to the loop portion 3 by means of a bolt or screw 7 which passes through a hole in the metal pressing 8 into an insert in the form of a bush 6 pushed into the end of the tube 1. The bush 6 can be held in place by crimping the handle tube. In this embodiment, the end of tube 1 does not directly contact the pressing 8, being prevented from doing so by the base of the groove 21 in the cap 4. The handle may be prevented from rotation by providing a tight-fit for the tube end in the groove 21, but, preferably, an additional component serves to prevent rotation.

As best seen in Fig. 4, which shows the various components (minus the moulded cap 4) prior to assembly, the additional component is a washer member 16 having two tabs 17 which extend toward the end of the handle tube. The washer member 16 is located on the pressing 8 which, for this purpose, is T-shaped. The "horizontal" top bar 18 of the T bridges the limbs 10, 11 of the loop 3, whereas the "vertical" bar 19 extends to the bend of the loop. The washer member is located on the vertical bar 19, which incorporates the hole 15 for the fixing screw 7. Two slots (not shown) provided in the internal wall of the cap 4 enable the washer tabs 17 to be pushed through into the groove 21. As shown in Fig. 5, within the groove 21 the tabs 17 engage corresponding cut-outs 13 formed in the end of the tube 1, thus preventing rotation of the handle.

In a modification of the second embodiment, the moulded cap 4 may have the same structure as in the first embodiment, i.e. without the circular groove. In this case, the end of the handle may contact the fixing plate 8 or be spaced therefrom according to the length of the washer tab 17 and the depth of the cut-out 13. Again, the engagement of the washer with the fixing plate and of the handle tube cut-outs with the washer tabs prevents rotation of the handle.

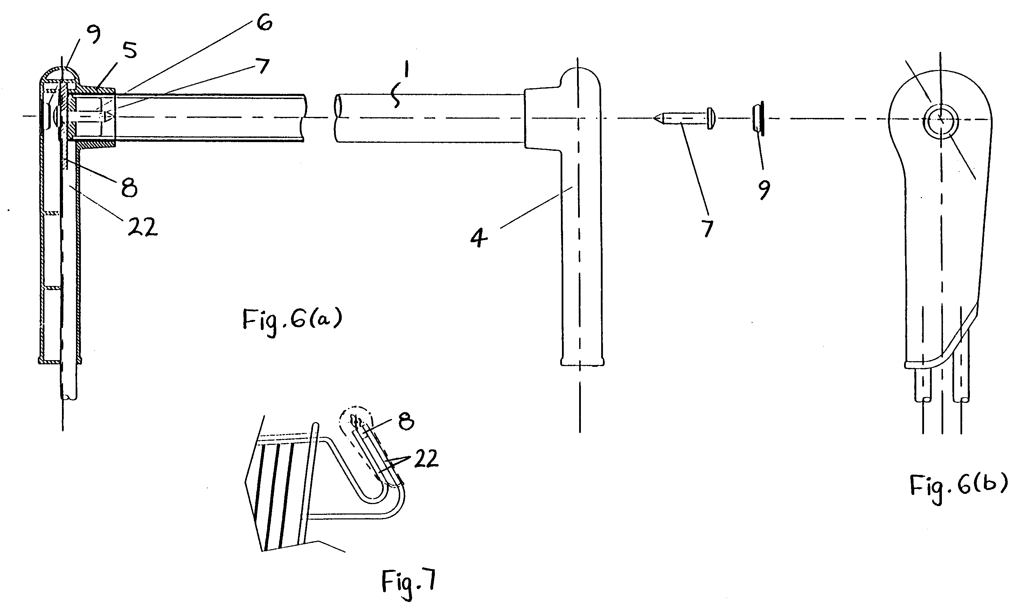

Figs. 6 and 7 illustrate a third embodiment of the invention, in which the same reference numerals denote elements which are the same as or equivalent to those of the first and second embodiments.

As seen from Fig. 7, this embodiment differs from the previous ones in the structure of the support. Here, in place of the loop of wire 2, there is provided a pair of separate wire portions 22 which extend substantially parallel to one another and lie in a common plane. A metal plate 8 is rigidly fixed between the free ends of the wire portions 22. The wire portions 22 may be circumferentially flattened at their free ends so as to seat the plate 8, as shown in the sectional view of Fig. 6(a). The plate 8 has a portion which projects beyond the ends of the wire portions 22 and receives the end of the handle tube 1. In other respects, this embodiment is basically the same as the first embodiment. Thus, the end of the handle tube 1 is secured to the plate 8 by means of insert 6 and fixing bolt of screw 7. Like the first embodiment, preferably the end of the handle tube 1 has a pair of cut-outs, the projecting portion of the plate 8 having corresponding reduced width sections (see Fig. 7) which engage the cut-outs to prevent rotation of the handle.

Considerable torque may be applied to the handle in use. (In the case of supermarket trolleys, young children have a habit of swinging from the handle). Advantageously, in the described arrangements any torque applied to the handle is transmitted to the pressing 8 (via the tabbed washer 17 in the second embodiment) and thus to the wire loop 3 or wire portions 22. This prevents damage to the moulded cap 4 which tends to occur in the known handlebar assemblies and necessitates periodic replacement.

It will be appreciated that the described fixing arrangements using a screw 7 and an insert 6 are given by way of example only. The insert could, of course, be made integral with the handle tube.

Although in the described embodiments the support comprises wire, it could alternatively comprise tube.

## Claims

1. A handlebar assembly for a trolley, of a type in which the ends of a grip handle in the form of a rigid tube are secured to respective supports extending from the trolley, the assembly comprising said grip handle (1), said supports (2,3;22), a cap member (4) which fits over and receives the support and which is adapted to receive an end of the handle, a fixing member (8) permanently and rigidly fixed to the support independently of the cap member, and means (6,7) for securing the handle end to said fixing member, the means for securing comprising a screw or bolt (7) whose threaded end is inserted through a hole (15) in the fixing member (8) and received in the end of the handle (1).

2. A handlebar assembly according to claim 1, wherein said support comprises two wire or tube portions (3;22) lying in a common plane and said fixing member comprises a plate member (8) which lies substantially in said plane.

3. A handlebar assembly according to claim 2, wherein said fixing member (8) bridges said two wire or tube portions (3;22) of the support.

4. A handlebar assembly according to any one of claims 1 to 3, wherein the means for securing further comprises an insert member (6) which can be inserted in, or is integral to, the end of the handle (1) and is adapted to receive said threaded end of the screw or bolt (7).

5. A handlebar assembly according to any one of the preceding claims, wherein said cap member (4) has an outwardly projecting sleeve portion (5) which is adapted to receive the end of the handle (1).

6. A handlebar assembly according to any one of the preceding claims, wherein said fixing member (8) is adapted to engage cut-outs (13) formed in the end of the handle (1) to prevent the handle from rotating.

7. A handlebar assembly according to claim 6, as appendent to claim 4, wherein said insert member (6) includes lugs (14) adapted to locate in said cut-outs (13).

8. A handlebar assembly according to claim 4 or claim 7, or claim 5 or claim 6 as appendent to claim 4, wherein said insert member (6) comprises an expanding bush.

9. A handlebar assembly according to any one of claims 1 to 5, wherein said means for securing comprises a washer member (16) which locates on the fixing member, said washer member having tabs (17) which are adapted to engage cut-outs (13) formed in the end of the handle (1) to prevent the handle from rotating.

10. A handlebar assembly according to claim 9, as appendent to claim 5, wherein said sleeve portion (5) of the cap member (4) provides a circular groove (21) in which the end of the handle (1) is seated, and said tabs (17) of the washer member project into said groove (21).

11. A handlebar assembly according to claim 9 or claim 10, wherein said support comprises a wire or tube (2) bent on itself to form a substantially U-shaped loop (3), and said fixing member is a T-shaped plate member (8) with the horizontal bar (18) of the T bridging the limbs of said loop and the vertical bar of the T defining the location for said washer member (16).

12. A handlebar assembly according to any one of the preceding claims, wherein said cap member (4) has an aperture adjacent said fixing member (8) and there is provided a finishing insert (9) adapted to fit said aperture.

13. A trolley which is provided with a handlebar assembly in accordance with any one of the preceding claims.

## Patentansprüche

1. Griffstangenanordnung für einen Wagen, der Art, in der die Enden eines Handgriffs in Form eines starren Rohres an entsprechenden, vom Wagen ausgehenden Trägern befestigt sind, wobei die Anordnung den Handgriff (1), die Träger (2, 3; 22), ein Kappenelement (4), das auf den Träger paßt und ihn aufnimmt und eingerichtet ist, ein Ende des Griffs entgegenzunehmen, ein Befestigungselement (8), das unabhängig von dem Kappenelement dauerhaft und starr an dem Träger angebracht ist, und eine Einrichtung (6, 7) zur Befestigung des Griffendes an dem Befestigungselement aufweist, und wobei die Befestigungseinrichtung eine Schraube oder einen Bolzen (7) mit einem Gewindeende aufweist, das durch ein Loch (15) in dem Befestigungselement (8) geführt und von dem Ende des Griffs (1) aufgenommen wird.

2. Griffstangenanordnung nach Anspruch 1, wobei der Träger zwei in einer gemeinsamen Ebene liegende Draht- oder Rohrabschnitte (3; 22) und das Befestigungselement ein in im wesentlichen dieser Ebene liegendes Plattenelement (8) aufweist.

3. Griffstangenanordnung nach Anspruch 2, wobei das Befestigungselement (8) die zwei Draht- oder Rohrabschnitte (3; 22) des Trägers miteinander verbindet.

4. Griffstangenanordnung nach einem der Ansprüche 1 bis 3, wobei die Befestigungseinrichtung außerdem ein Einsatzelement (6) aufweist, das in das Ende des Griffs (1) eingesetzt werden kann oder in dieses integriert ist und eingerichtet ist, das Gewindeende der Schraube oder des Bolzens (7) entgegenzunehmen.

5. Griffstangenanordnung nach einem der vorhergehenden Ansprüche, wobei das Kappenelement (4) einen nach außen vorstehenden Büchsenabschnitt (5) zur Entgegennahme des Endes des Griffs (1) aufweist.

6. Griffstangenanordnung nach einem der vorhergehenden Ansprüche, wobei das Befestigungselement (8) zum Eingriff in in den Enden des Griffs (1) ausgebildete Ausschnitte (13) ausgestaltet ist, um zu verhindern, daß sich der Griff dreht.

7. Griffstangenanordnung nach Anspruch 6, soweit von Anspruch 4 abhängig, wobei das Einsatzelement (6) Ansätze (14) zur Anordnung in den Ausschnitten (13) aufweist.

8. Griffstangenanordnung nach Anspruch 4, 7, 5 oder 6 soweit von Anspruch 4 abhängig, wobei das Einsatzelement (6) eine Spreitzbüchse aufweist.

9. Griffstangenanordnung nach einem der Ansprüche 1 bis 5, wobei die Befestigungseinrichtung ein Scheibenelement (16) aufweist, das auf dem Befestigungselement angeordnet wird und Zungen (17) zum Eingriff in in den Enden des Griffs (1) ausgebildete Ausschneidungen (13) aufweist, um zu verhindern, daß sich der Griff dreht.

10. Griffstangenanordnung nach Anspruch 9 soweit von Anspruch 5 abhängig, wobei der Büchsenabschnitt (5) des Kappenelements (4) eine ringförmige Rinne (21) aufweist, in die das Ende des Griffs (1) eingesetzt wird, und wobei die Zungen (17) des Scheibenelements in die Rinne (21) hineinragen.

11. Griffstangenanordnung nach Anspruch 9 oder 10, wobei der Träger unter Bildung einer im wesentlichen U-förmigen Schleife (3) einen auf sich selbst zurückgebogener Draht oder ein auf sich selbst zurückgebogenes Rohr (2) aufweist und das Befestigungselement ein T-förmiges Plattenelement (8) ist, bei dem der horizontale Balken (18) des T die Schenkel der Schleife miteinander verbindet und der vertikale Balken des T den Ort des Scheibenelements (16) festlegt.

12. Griffstangenanordnung nach einem der vorhergehenden Ansprüche, wobei das Kappenelement (4) in Nachbarschaft des Befestigungselements (8) eine Öffnung aufweist und ein in die Öffnung einpassender Abschlußeinsatz vorgesehen ist.

13. Wagen mit einer Griffstangenanordnung nach einem der vorhergehenden Ansprüche.

## Revendications

1. Ensemble formant barre de direction de chariot, d'un type dans lequel les extrémités d'une poignée de saisie ayant la forme d'un tube rigide sont fixées sur des supports respectifs s'étendant à partir du chariot, l'ensemble comportant ladite poignée de saisie (1), lesdits supports (2, 3 ; 22), un élément formant capuchon (4) qui s'adapte sur le support et le reçoit et qui est adapté pour recevoir une extrémité de la poignée, un élément de fixation (8) fixé de manière permanente et rigide sur le support indépendamment de l'élément formant capuchon, et des moyens (6, 7) pour fixer l'extrémité de poignée sur ledit élément de fixation, les moyens pour fixer comportant une vis ou un boulon (7) dont l'extrémité filetée est insérée à travers un trou (15) de l'élément de fixation (8) et est reçue dans l'extrémité de la poignée (1).

2. Ensemble formant barre de direction selon la revendication 1, dans lequel ledit support comporte deux parties en fil métallique ou en tube (3 ; 22) situées dans un plan commun et ledit élément de fixation comporte un élément formant plaque (8) qui se trouve pratiquement dans ledit plan.

3. Ensemble formant barre de direction selon la revendication 2, dans lequel ledit élément de fixation (8) constitue un pont entre lesdites deux parties en fil métallique ou en tube (3 ; 22) du support.

4. Ensemble formant barre de direction selon l'une quelconque des revendications 1 à 3, dans lequel les moyens pour fixer comportent en outre un élément inséré (6) qui peut être inséré dans l'extrémité de la poignée (1) ou peut former un seul bloc avec celle-ci et qui est adapté pour recevoir ladite extrémité filetée de la vis ou du boulon (7).

5. Ensemble formant barre de direction selon l'une quelconque des revendications précédentes, dans lequel ledit élément formant capuchon (4) a une partie (5) formant manchon en saillie vers l'extérieur, qui est adaptée pour recevoir l'extrémité de la poignée (1).

6. Ensemble formant barre de direction selon l'une quelconque des revendications précédentes, dans lequel ledit élément de fixation (8) est adapté pour venir en prise avec des découpes (13) formées dans l'extrémité de la poignée (1) pour empêcher la poignée de tourner.

7. Ensemble formant barre de direction selon la revendication 6 lorsqu'elle dépend de la revendication 4, dans lequel ledit élément inséré (6) comporte des pattes (14) adaptées pour être positionnées dans lesdites découpes (13).

8. Ensemble formant barre de direction selon la revendication 4 ou 7, ou la revendication 5 ou la revendication 6 lorsqu'elles dépendent de la revendication 4, dans lequel ledit élément inséré (6) comporte une bague s'expansant.

9. Ensemble formant barre de direction selon l'une quelconque des revendications 1 à 5, dans lequel lesdits moyens pour fixer comportent un élément formant rondelle (16) qui est positionné sur l'élément de fixation, ledit élément formant rondelle ayant des pattes (17) qui sont adaptées pour venir en prise avec des découpes (13) formées dans l'extrémité de la poignée (1) pour empêcher la poignée de tourner.

10. Ensemble formant barre de direction selon la revendication 9, lorsqu'elle dépend de la revendication 5, dans lequel ladite partie formant manchon (5) de l'élément formant capuchon (4) fournit une gorge circulaire (21) dans laquelle l'extrémité de la poignée (1) est en appui, et lesdites pattes (17) de l'élément formant rondelle font saillie à l'intérieur de ladite gorge (21).

11. Ensemble formant barre de direction selon la revendication 9 ou la revendication 10, dans lequel ledit support comporte un fil métallique ou un tube (2) incurvé sur lui-même pour former une bouche (3) ayant pratiquement la forme d'un U, et ledit élément de fixation est un élément formant plaque en forme de T (8), la barre horizontale (18) du T formant un pont entre les branches de ladite bouche et la barre verticale du T définissant l'emplacement dudit élément formant rondelle (16).

12. Ensemble formant barre de direction selon l'une quelconque des revendications précédentes, dans lequel ledit élément formant capuchon (4) a une ouverture adjacente audit élément de fixation (8) et il est prévu un élément rapporté de finition (9) adapté pour s'ajuster dans ladite ouverture.

13. Chariot qui est muni d'un ensemble formant barre de direction selon l'une quelconque des revendications précédentes.
